# EUROPÄISCHE PATENTSCHRIFT

(11) **EP 3 826 892 B1**
(45) Veröffentlichungstag und Bekanntmachung des Hinweises auf die Patenterteilung: **27.10.2021**
(21) Anmeldenummer: 20746906.5
(22) Anmeldetag: 16.07.2020
(51) Int. Cl.: B60T 8/88, B60T 17/22, G07C 5/08

(54) **VERFAHREN ZUM ERMITTELN EINER BENUTZERSPEZIFISCHEN KONFIGURATION EINER BREMSVORRICHTUNG SOWIE EIN KRAFTFAHRZEUG UND EIN COMPUTERLESBARES SPEICHERMEDIUM HIERZU**
METHOD FOR DETERMINING A USER-SPECIFIC CONFIGURATION OF A BRAKING DEVICE, AND A MOTOR VEHICLE, AND A COMPUTER-READABLE STORAGE MEDIUM
PROCÉDÉ DE DÉTERMINATION D'UNE CONFIGURATION SPÉCIFIQUE À L'UTILISATEUR D'UN DISPOSITIF DE FREINAGE, ET D'UN VÉHICULE AUTOMOBILE, ET SUPPORT DE STOCKAGE LISIBLE PAR ORDINATEUR

(30) Priorität: 13.08.2019 DE 102019212076
(43) Veröffentlichungstag der Anmeldung: 02.06.2021
(73) Patentinhaber: Audi AG, 85045 Ingolstadt (DE)
(72) Erfinder: SCHÜRMANN, Lorenzo, 85049 Ingolstadt (DE); WITTMANN, Felix, 85049 Ingolstadt (DE)
(86) Internationale Anmeldenummer: PCT/EP2020/070179
(87) Internationale Veröffentlichungsnummer: WO 2021/028148

(56) Entgegenhaltungen:
- WO-A1-2019/020301
- DE-A1-102015 120 991
- DE-A1-102016 006 541
- US-A1- 2015 228 129
- US-A1- 2018 096 542

## Beschreibung

Die Erfindung betrifft ein Verfahren zum Ermitteln einer benutzerspezifischen Konfiguration einer Bremsvorrichtung eines Kraftfahrzeugs. Ferner betrifft die Erfindung ein Kraftfahrzeug und ein computerlesbares Speichermedium hierzu.

Beim Erwerb eines Kraftfahrzeugs weist das Kraftfahrzeug eine aktuelle Konfiguration einer Bremsvorrichtung auf, wobei die Konfiguration durch eine Ausgestaltung zumindest eines mechanischen Bauteils und/oder eine Kombination mehrerer mechanischer Bauteile der Bremsvorrichtung gegeben ist. Die Konfiguration entspricht also dem physisch tatsächlich vorhandenen zumindest einem Bauteil der Bremsvorrichtung in dem Kraftfahrzeug. Dabei kann es sich bei dem zumindest einen Bauteil beispielsweise um einen Bremsbelag handeln. Beim Betreiben des Kraftfahrzeugs durch einen Fahrzeuglenker, d. h. einem Benutzer des Kraftfahrzeugs, wird die Bremsvorrichtung benutzerspezifisch beansprucht, d. h. genutzt.

In diesem Zusammenhang beschreibt die US 2013/0325541 A1 ein Verfahren zum Verwalten von Fahrzeugwartungsinformationen, wobei anhand der Fahrzeugwartungsinformationen ein Fahrzeugbesitzer und ein Fahrzeugdienstleister über eine empfohlene Wartungsplanung, spezifische Fahrzeugteile und Reparaturanforderungen alarmiert und aufgeklärt wird. Ein bestimmtes Fahrverhalten des Fahrzeugnutzers, wie ein häufiges und starkes Bremsen, kann einen Wartungsplanungsalarm vom Fahrzeugdienstleister an den Fahrzeugnutzer auslösen, wobei der Wartungsplanungsalarm eine Warnmeldung zur Bremsenwartung und Sonderangebote für Bremsbeläge umfassen kann.

Die US 2017/0217419 A1 beschreibt eine Vorrichtung zum Analysieren eines Fahrzeugbremssystems. Die Vorrichtung ist dazu eingerichtet ist, basierend auf empfangenen Daten ein Vorliegen eines Problems zu ermitteln und eine empfohlene Maßnahme auszugeben. Die Daten können Sensordaten (Bremspedalkraft/-verschiebung, Bremsleitungsdruck, Fahrzeugbeschleunigung/-radgeschwindigkeit) und Kontextdaten (Straßenoberfläche, Fahrzeughöhe, Wetter) umfassen. Beispielsweise kann sich das Problem auf eine Ausrichtung und/oder eine Temperatur eines Bremsbelags beziehen. Anhand des analysierten Fahrzeugbremssystems kann ein Fahrzeughersteller eine Konstruktion eines Bremssystems oder einer oder mehreren Bremssystemkomponenten erstellen oder ändern, um das Problem in Bezug auf ein betroffenes Fahrzeug und/oder auf anwendbare Fahrzeuge zu vermeiden oder zu mindern.

Ferner offenbart die US 2015/0228129 A1 ein Verfahren und ein System zum Profilieren einer Fahrzeugnutzung eines Fahrzeugs zum Optimieren einer Routenauswahl, zum Erstellen von Profilen von Fahrern sowie des Fahrzeugs und zum Bereitstellen zugehöriger Dienstleistungen für das Fahrzeug. Dabei kann anhand von fahrzeugseitigen Diagnosedaten ein bestimmtes Verhalten des Fahrers und eine Modifikation des bestimmten Verhaltens ermittelt werden, um eine Fahrzeugmetrik zu verbessern oder zu ändern.

Die WO 2019/020301 A1 offenbart ein Verfahren zum Unterdrücken von Bremsgeräuschen bei einem Fahrzeug zur Ausführung in einem Fahrzeug, sowie einen zugehörigen zentralen Server, mit den Schritten: Empfangen einer Anzahl von Nachrichten von den Fahrzeugen, wobei die Nachrichten Bremszustandsdaten beinhalten, und Erzeugen einer Anzahl von Reaktionsanweisungen basierend auf den Bremszustandsdaten, wobei jede Reaktionsanweisung eine Maßnahme zum Unterdrücken eines Bremsgeräusches enthält.

Aufgabe der vorliegenden Erfindung ist es, eine aktuelle Konfiguration einer Bremsvorrichtung in Abhängigkeit von einer benutzerspezifischen Nutzung eines Kraftfahrzeugs zu evaluieren.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren zum Ermitteln einer benutzerspezifischen Konfiguration einer Bremsvorrichtung eines Kraftfahrzeugs bereitgestellt. Dabei ist die Konfiguration durch eine Ausgestaltung zumindest eines mechanischen Bauteils, beispielsweise eine Geometrie und/oder einen Werkstoffs und/oder Bauteiltyps des zumindest einen Bauteils, vorgegeben. Zusätzlich oder alternativ ist die Konfiguration durch eine Kombination mehrerer mechanischer Bauteile gegeben, wobei es sich hierbei beispielsweise um eine Bremsscheibe und hierauf abgestimmte Bremsbeläge handeln kann. Zum Ermitteln der benutzerspezifischen Konfiguration, d.h. jener auf einen Benutzer, d.h. einen Fahrzeuglenker des Kraftfahrzeugs abgestimmten Konfiguration, wird ein benutzerspezifisches Bremsprofil insbesondere anhand von Messdaten ermittelt, die eine benutzerspezifische Nutzung der aktuellen (tatsächlich eingebauten) Konfiguration beschreiben. Das benutzerspezifische Bremsprofil wird mit möglichen Bremsprofilen verglichen anhand dessen die geeignete benutzerspezifische Konfiguration ermittelt, welche mittels einer ausgelösten Wechselmaßnahme in dem Kraftfahrzeug bereitgestellt wird.

Mittels einer Erfassungseinrichtung des Kraftfahrzeugs werden Messdaten erfasst, wobei anhand der Messdaten eine benutzerspezifische Nutzung der die aktuelle Konfiguration aufweisenden Bremsvorrichtung des Kraftfahrzeugs beschrieben wird. Mit anderen Worten werden mittels einer Messung der Erfassungseinrichtung, beispielsweise einer Sensoreinrichtung des Kraftfahrzeugs, die Messdaten erfasst. Bei den Messdaten kann es sich beispielsweise um zumindest einen Temperaturwert und/oder zumindest einen Druckwert handeln, wobei der Temperaturwert mittels eines in einem Nahbereich der Bremsvorrichtung angeordneten Temperatursensors und/oder der Druckwert mittels eines Drucksensors einer Bremsleitung der Bremsvorrichtung ermittelt werden kann. Die erfassten Messdaten charakterisieren die benutzerspezifische Nutzung, insbesondere eine benutzerspezifische Beanspruchung, der aktuellen Konfiguration der Bremsvorrichtung. Die benutzerspezifische Nutzung kann beispielsweise ein sportliches und/oder moderates Fahrverhalten und daraus resultierendes Bremsverhalten des Fahrzeuglenkers charakterisieren. Ein Datensatz, welcher die Messdaten und Identifikationsdaten zum Identifizieren der aktuellen Konfiguration der Bremsvorrichtung umfasst, wird für eine Auswerteeinrichtung bereitgestellt. D. h. die Messdaten und jene die aktuelle Konfiguration kennzeichnenden Identifikationsdaten werden gemeinsam mittels des Datensatzes an die Auswerteeinrichtung übermittelt. Bei den Identifikationsdaten können sich beispielsweise um eine Werksnummer des zumindest einen Bauteils der Bremsvorrichtung handeln. Die aktuelle Konfiguration kann beispielsweise eine Ausstattung der Bremsvorrichtung beschreiben, welche vom Benutzer vor einem Kauf des Kraftfahrzeugs ausgewählt wurde. In diesem Zusammenhang kann die Auswerteeinrichtung insbesondere als eine Auswerteeinrichtung des Kraftfahrzeugs und/oder einer mit dem Kraftfahrzeug verbundenen externen Servereinrichtung realisiert sein.

In Abhängigkeit von dem bereitgestellten Datensatz wird mittels der Auswerteeinrichtung das benutzerspezifische Bremsprofil ermittelt und bereitgestellt. Mit anderen Worten wird anhand des bereitgestellten Datensatzes das benutzerspezifische Bremsprofil erkannt und insbesondere für eine nachfolgende Datenauswertung zur Verfügung gestellt. Beispielsweise umfasst das benutzerspezifische Bremsprofil eine Korrelation, d. h. eine Beziehung zwischen unterschiedlichen Messwerten der erfassten Messdaten, wie ein Zusammenhang zwischen dem Temperaturwert und dem Druckwert.

Des Weiteren werden mögliche Bremsprofile für die Auswerteeinrichtung bereitgestellt, von denen jedes Bremsprofil einer jeweiligen alternativen Konfiguration der Bremsvorrichtung, wie sie in dem Kraftfahrzeug auswählbar ist, zugeordnet ist. Mit anderen Worten kann für das die aktuelle Konfiguration aufweisenden Kraftfahrzeug die jeweilige alternative Konfiguration der Bremsvorrichtung ausgesucht werden, wobei die jeweilige alternative Konfiguration abhängig von jedem der möglichen Bremsprofile ist. Insbesondere unterscheidet sich die jeweilige alternative Konfiguration von der aktuellen Konfiguration der Bremsvorrichtung. Beispielsweise weist die Bremsscheibe in der aktuellen Konfiguration einen ersten Durchmesser und in einer jeweiligen alternativen Konfiguration einen vom ersten Durchmesser abweichenden Durchmesser auf.

Dasjenige mögliche Bremsprofil, das mit dem benutzerspezifischen Bremsprofil einen größten Übereinstimmungsgrad aufweist, wird mittels der Auswerteeinrichtung erkannt und eine zugeordnete Konfiguration als die benutzerspezifische Konfiguration identifiziert. Mit anderen Worten werden die möglichen Bremsprofile mit dem benutzerspezifischen Bremsprofil verglichen und ermittelt, welches dasjenige Bremsprofil der möglichen Bremsprofile ist, welches eine größtmögliche Übereinstimmung mit dem benutzerspezifischen Bremsprofil aufweist. Die Übereinstimmung wird mittels des Übereinstimmungsgrad beschrieben, d. h. charakterisiert, wobei es sich beispielsweise einem Prozentwert handeln kann. Dasjenige mögliche Bremsprofil mit der größten Übereinstimmung wird als die benutzerspezifische Konfiguration erkannt. Beispielsweise handelt es sich bei demjenigen möglichen Bremsprofil um ein Sportbremsprofil, wobei die benutzerspezifische Konfiguration insbesondere auf das erkannte sportliche Fahrverhalten des Fahrzeuglenkers abgestimmt sein kann.

Zum Bereitstellen der benutzerspezifischen Konfiguration in dem Kraftfahrzeug, wird die Wechselmaßnahme mittels der Auswerteeinrichtung ausgelöst. Mit anderen Worten wird die Wechselmaßnahme veranlasst, um die benutzerspezifische Konfiguration in dem Kraftfahrzeug zu realisieren. Beispielsweise kann bei einem Reparatur- und/oder Wartungstermin das zumindest eine Bauteil mit einem davon abweichenden Bauteil ersetzt werden, wobei beispielsweise die Ausgestaltung des abweichenden Bauteils der benutzerspezifischen Konfiguration entsprechen kann.

Hierdurch ergibt sich der Vorteil, dass anhand einer erfassten benutzerspezifische Nutzung der Bremsvorrichtung die aktuelle Konfiguration bewertet und durch die benutzerspezifische Konfiguration ausgewechselt werden kann. Dadurch kann eine Anpassung und/oder eine Veränderung der Bremsvorrichtung vorgenommen werden, welche insbesondere eine Lebensdauer der Bremsvorrichtung erhöhen und/oder ein sicheres Betreiben der Bremsvorrichtung, insbesondere während eines Bremsvorganges bereitstellen kann. Dadurch kann eine Überhitzung und/oder ein übermäßige Verschleiß der Bremsvorrichtung bzw. des zumindest einen Bauteils und/oder der mehreren Bauteile verringert werden. In diesem Zusammenhang kann insbesondere ein Nachlassen einer Bremswirkung aufgrund starker Wärmebeanspruchung (Bremsfading) verhindert werden. Somit kann insbesondere eine benutzerspezifische Aufrüstung der Bremsvorrichtung realisiert werden.

Der Erfindung liegt die Erkenntnis zugrunde, dass die benutzerspezifische Nutzung der Bremsvorrichtung unzureichend beim Betreiben des Kraftfahrzeugs dokumentiert und/oder bereitgestellt wird. Dadurch bleibt diese beispielsweise bei einem Austausch des zumindest einen mechanischen Bauteils unberücksichtigt. Des Weiteren kann die benutzerspezifische Nutzung für den Fahrzeuglenker, beispielsweise das sportliche Fahrverhalten, verborgen und kann bei einer zukünftigen Fahrzeugnutzung außen vor bleiben.

Die Erfindung umfasst auch Ausführungsformen, durch die sich zusätzliche Vorteile ergeben.

Eine Ausführungsform sieht vor, dass mittels der Wechselmaßnahme ein Wechsel des zumindest einen Bauteils veranlasst wird, wobei vor dem Wechsel ein Eingriff in einen Betrieb des Kraftfahrzeugs und/oder eine Anfrage zum Bereitstellen des zumindest einen Bauteils durchgeführt wird. Mit anderen Worten wird das zumindest eine Bauteil durch ein davon abweichendes Bauteil ersetzt, d. h. durch dieses ausgewechselt. Vorab wird in den Betrieb des Kraftfahrzeugs eingegriffen, d. h. dieser insbesondere mittels der Auswerteeinrichtung gesteuert, und alternativ oder zusätzlich wird beispielsweise eine Verfügbarkeit des zumindest einen Bauteils ermittelt. Beim Durchführen des Eingriffs in den Betrieb wird zumindest ein Steuerparameter angepasst und/oder zumindest eine Komponente des Kraftfahrzeugs deaktiviert. Das bedeutet, dass der Steuerparameter verändert wird und beispielsweise kann anhand des angepassten Steuerparameters der Bremsdruck geregelt werden. Hierdurch ergibt sich der Vorteil, dass mittels des angepassten Steuerparameters das Fahrverhalten des Fahrzeuglenkers beeinflusst, d. h. verändert werden kann, damit das Bremsprofil eine größere Übereinstimmung mit einem von der aktuellen Konfiguration vorgegebenen Bremsprofil erhält. Alternativ oder zusätzlich wird die zumindest eine Komponente des Kraftfahrzeugs deaktiviert, d. h. ausgeschalteten. Dabei kann beispielsweise ein weiteres Betreiben und/oder eine Inbetriebnahme des Kraftfahrzeugs gesteuert werden, indem insbesondere ein Motor und/oder die Bremsvorrichtung als Komponente des Kraftfahrzeugs deaktiviert wird. Vorteilhaft ist, dass insbesondere bei einer Überhitzung der Bremsvorrichtung eine weitere Beanspruchung der Bremsvorrichtung gesteuert und/oder verhindert werden kann, um ein sicheres Betreiben des Kraftfahrzeugs bereitzustellen. Im Zusammenhang mit der durchgeführten Anfrage zum Bereitstellen des zumindest einen Bauteils wird bei einem Hersteller und/oder einem Händler des zumindest einen Bauteils dessen Verfügbarkeit ermittelt, das heißt angefragt. Mit anderen Worten wird in Erfahrung gebracht, dass das zumindest eine Bauteil von dem Hersteller und/oder dem Händler zur Verfügung gestellt werden kann. Beispielsweise kann die Auswerteeinrichtung die Anfrage über eine Kommunikationsverbindung an den Hersteller und/oder den Händler übermitteln, wobei der Hersteller und/oder der Händler anhand einer Datenbank einem Bestand des zumindest einen Bauteils prüfen kann und gegebenenfalls eine Produktion und/oder eine Bestellung des zumindest einen Bauteils veranlassen kann. Vorteilhaft ist, dass die Verfügbarkeit des zumindest einen Bauteils insbesondere zeitnah ermittelt und bei mangelnder Verfügbarkeit eine Gegenmaßnahme eingeleitet werden kann.

Eine weitere Ausführungsform sieht vor, dass im Zusammenhang mit der Wechselmaßnahme ein Ausgabeinhalt dem Benutzer des Kraftfahrzeugs mittels einer Ausgabeeinrichtung ausgegeben wird. Dabei charakterisiert der Ausgabeinhalt das ermittelte Bremsprofil und die daraus empfohlene benutzerspezifische Konfiguration der Bremsvorrichtung. Mit anderen Worten werden anhand des Ausgabeinhalts dem Benutzer das ermittelte Bremsprofil und die benutzerspezifische Konfiguration der Bremsvorrichtung angezeigt. Die Ausgabeeinrichtung ist in das Kraftfahrzeug integriert und/oder Teil eines mobilen Endgeräts. Das bedeutet, dass die Ausgabeeinrichtung in dem Kraftfahrzeug und/oder in dem mobilen Endgerät angeordnet ist. Die Ausgabeeinrichtung kann beispielsweise als ein Bildschirm und/oder ein Lautsprecher ausgebildet und in einem Infotainmentsystem des Kraftfahrzeugs bereitgestellt sein. Alternativ oder zusätzlich kann der Bildschirm und/oder der Lautsprecher in einem Smartphone des Benutzers eingebaut sein. In Reaktion auf die Ausgabe des Ausgabeinhalts wird eine Benutzereingabe erfasst. Mit anderen Worten wird eine auf die Ausgabe des Ausgabeinhalts folgende Benutzereingabe ermittelt. Bei der Benutzereingabe kann es sich beispielsweise um eine erfasste Berührung des Benutzers handeln, welche mittels des berührungsempfindlich ausgebildeten Bildschirms des Kraftfahrzeugs und/oder des Smartphones erfasst wird. Alternativ oder zusätzlich kann die Benutzereingabe einen empfangenen Sprachbefehl des Benutzers umfassen. Mittels der Benutzereingabe kann beispielsweise ein Kauf des zumindest einen Bauteils, dessen Ausgestaltung der benutzerspezifischen Konfiguration entspricht, abgeschlossen und/oder ein Termin zum Austauschen des zumindest einen Bauteils bestätigt werden. Vorteilhaft ist, dass der Benutzer über die benutzerspezifische Nutzung der Bremsvorrichtung und eine daraus resultierende Aufrüstungsempfehlung informiert werden kann. Des Weiteren kann die Ausgabe des Anzeigeinhalts vom Benutzer mittels der erfassten Benutzereingabe bestätigt werden.

Eine weitere Ausführungsform sieht vor, dass durch die jeweilige Konfiguration der Bremsvorrichtung eine für das jeweilige Bremsprofil charakteristische Wärmebeanspruchung der Bremsvorrichtung resultiert und zum Reduzieren einer aktuellen Wärmebeanspruchung der Bremsvorrichtung mittels der ausgelösten Wechselmaßnahme die aktuelle Konfiguration durch die benutzerspezifische Konfiguration ausgetauscht wird. Mit anderen Worten ergibt sich eine charakteristische Wärmebelastung der Bremsvorrichtung anhand des jeweiligen Bremsprofils, wobei das jeweilige Bremsprofil der jeweiligen Konfiguration zugeordnet ist. Um eine aktuelle Wärmebelastung der Bremsvorrichtung zu verringern, wird die aktuelle Konfiguration durch die benutzerspezifische Konfiguration der Bremsvorrichtung ausgewechselt. Beispielsweise gibt ein Sportbremsprofil eine für das sportliche Fahrverhalten typische Wärmebeanspruchung der Bremsvorrichtung und ein Standardbremsprofil eine für das moderate Fahrverhalten typische Wärmebeanspruchung an.

Wird insbesondere anhand der benutzerspezifischen Nutzung das sportliche Fahrverhalten erkannt, wobei die aktuelle Konfiguration der Bremsvorrichtung eine auf das moderate Fahrverhalten angepasste Konfiguration aufweist, dann kann die aktuelle Wärmebeanspruchung durch einen Wechsel auf die benutzerspezifische Konfiguration, das heißt eine für das sportliche Fahrverhalten geeignete Konfiguration, verringert werden. Hierdurch ergibt sich der Vorteil, dass mittels der Wechselmaßnahme die aktuelle Wärmebeanspruchung der Bremsvorrichtung in Abhängigkeit von der benutzerspezifischen Nutzung reduziert und eine übermäßige Wärmebeanspruchung der Bremsvorrichtung verhindert werden kann.

Eine weitere Ausführungsform sieht vor, dass beim Erfassen der Messdaten zumindest zwei physikalische Messgrößen erfasst werden, wobei beim Ermitteln des benutzerspezifischen Bremsprofils eine aktuelle Kennlinie der zumindest zwei Messgrößen erzeugt wird, anhand derer zumindest ein Überhitzungsereignis identifiziert wird. Mit anderen Worten werden mittels der Erfassungseinrichtung zumindest zwei physikalische Messgrößen gemessen und im benutzerspezifischen Bremsprofil berücksichtigt, wobei die aktuelle Kennlinie der zumindest zwei Messgrößen eine Abhängigkeit der zumindest zwei Messgrößen zueinander beschreibt. In Abhängigkeit von der aktuellen Kennlinie kann das zumindest ein Überhitzungsereignis erkannt werden. Dabei kann beispielsweise die aktuelle Kennlinie mit einer hinterlegten Kennlinie verglichen werden, wobei bei einem Überschreiten der hinterlegten Kennlinie durch die aktuelle Kennlinie das zumindest eine Überhitzungsereignis identifiziert werden kann. Bei den zumindest zwei physikalischen Messgrößen handelt es sich insbesondere um den Temperaturwert und/oder den Druckwert als eine erste Messgröße und um eine Zeiteinheit als eine zweite Messgröße. Beispielsweise kann anhand eines zeitlichen Verlaufes einer Temperatur und/oder eines Drucks die aktuelle Kennlinie ermittelt werden. Hierdurch ergibt sich der Vorteil, dass anhand der aktuellen Kennlinie das zumindest eine Überhitzungsereignis der Bremsvorrichtung einfach erkannt und eine entsprechende Gegenmaßnahmen zum Schutz vor Überhitzung ergriffen werden kann.

Eine weitere Ausführungsform sieht vor, dass beim Erfassen der Messdaten eine Kurvigkeit und/oder eine Steigung eines befahrenen Fahrbahnabschnitts erfasst wird, wobei anhand der Kurvigkeit und/oder der Steigung eine die benutzerspezifische Nutzung der Bremsvorrichtung beeinflussende Charakteristik des Fahrbahnabschnitts ermittelt und als Teil des Bremsprofils bereitgestellt wird. Mit anderen Worten erfasst die Erfassungseinrichtung im Zusammenhang mit dem Erfassen der Messdaten zusätzlich die Kurvigkeit, d. h. zumindest eine Winkeländerung des Fahrbahnabschnitts bezogen auf eine Länge des Fahrbahnabschnitts, und alternativ oder zusätzlich die Steigung, d. h. eine Steilheit des Fahrbahnabschnitts. Die Kurvigkeit und/oder die Steigung beschreiben die Charakteristik des Fahrbahnabschnitts und werden beim Bereitstellen des Bremsprofils als Teil des Bremsprofils übermittelt. Beispielsweise kann anhand der Charakteristik des Fahrbahnabschnitts erkannt werden, ob das Kraftfahrzeug auf einer Rennstrecke oder einer Bergstraße betrieben wird. Hierdurch ergibt sich der Vorteil, dass die Charakteristik des Fahrbahnabschnitts ohne eine Übermittlung von standortbezogenen und/oder personenbezogenen Daten ermittelt werden kann.

Eine weitere Ausführungsform sieht vor, dass die Auswerteeinrichtung eine interne Auswerteeinheit des Kraftfahrzeugs und/oder eine mit dem Kraftfahrzeug verbundene externe Auswerteeinheit einer Servereinrichtung umfasst. Insbesondere handelt es sich bei der Servereinrichtung um eine Servereinrichtung eines Fahrzeugherstellers und/oder eines Fahrzeugkomponentenherstellers. Mit anderen Worten kann die Auswerteeinrichtung die interne und/oder die externe Auswerteeinheit aufweisen, wobei die interne Auswerteeinheit in das Kraftfahrzeug integriert und die externe Auswerteeinheit Teil der Servereinrichtung ist. Die Servereinrichtung ist mittels einer Kommunikationsverbindung mit dem Kraftfahrzeug zum Übermitteln von Daten und/oder Profilen verbunden und kann dem Fahrzeughersteller, das heißt einem Produzenten des Kraftfahrzeugs und/oder einem Vertreibenden einer Fahrzeugmarke, und alternativ oder zusätzlich dem Fahrzeugkomponentenherstellers, wie einem Zulieferer der Bremsvorrichtung und/oder des zumindest einen Bauteils der Bremsvorrichtung, zugeordnet werden. In diesem Zusammenhang werden beim Bereitstellen des Datensatzes und/oder des benutzerspezifischen Bremsprofils für die externe Auswerteeinheit benutzerbezogene Daten eines jeweiligen Benutzers des Kraftfahrzeugs pseudonymisiert und/oder anonymsiert übermittelt. Mit anderen Worten werden benutzerbezogene Daten vor dem Übermitteln des Datensatzes und/oder jeweiliger Bremsprofile durch ein Pseudonym ersetzt und/oder derart verändert, dass eine Zuordnung zum Benutzer des Kraftfahrzeugs erschwert und/oder verhindert wird. Hierdurch ergibt sich der Vorteil, dass eine Datenschutzvorgabe erfüllt und dennoch für eine Entwicklung wertvolle Messdaten als Rohdaten und/oder deren Korrelation für den Fahrzeughersteller und/oder den Fahrzeugkomponentenhersteller bereitgestellt werden können.

Durch die Erfindung ist ein Kraftfahrzeug mit einer Bremsvorrichtung für ein Verfahren zum Ermitteln einer benutzerspezifischen Konfiguration einer Bremsvorrichtung des Kraftfahrzeugs bereitgestellt. Dabei ist eine jeweilige Konfiguration der Bremsvorrichtung dazu eingerichtet, eine Ausgestaltung einer Bremsschreibe und/oder eines Bremsbelags der Bremsvorrichtung vorzugeben. Mit anderen Worten wird anhand der jeweiligen Konfiguration eine Geometrie und/oder ein Werkstoff der Bremsscheibe und/oder des Bremsbelags spezifiziert. Insbesondere kann es sich hierbei um einen Durchmesser der Bremsscheibe handeln. Hierdurch ergibt sich der Vorteil, dass einem benutzerspezifischen Fahrverhalten, anhand dessen ein jeweiliges Bremsprofil ermittelt wird, welchem die jeweilige Konfiguration zugeordnet ist, die besonders vorteilhaft der Ausgestaltung der Bremsscheibe und/oder des Bremsbelags ermittelt werden kann.

Eine Ausführungsform hierzu sieht vor, dass die jeweilige Konfiguration der Bremsscheibe zum Regulieren einer Wärmebeanspruchung einen Durchmesser und/oder eine Belüftung und/oder eine Luftzuführung vorgibt. Mit anderen Worten bestimmt jeweilige Konfiguration der Bremsscheibe deren Wärmeregulierung, welches mittels der Vorgabe des Durchmessers und/oder der Belüftung und/oder der Luftzuführung realisiert werden kann. Bei der Vorgabe des Durchmesser ergibt sich der Vorteil, dass durch Erhöhen des Durchmessers der Bremsscheibe effizient Wärme aufgrund einer größeren Masse der Bremsscheibe abgeführt und des Weiteren eine Bremswirkung,

insbesondere bei einer starken Motorisierung des Kraftfahrzeugs und/der für eine Rennstrecke, erhöht werden kann. Beispielsweise umfasst die Belüftung der Bremsscheibe eine Innenbelüftung und/oder eine Außenbelüftung mittels radialen Kühlöffnungen, welche zwischen zwei Reibflächen angeordnet sind. Hierdurch ergibt sich der Vorteil, dass aufgrund eines mittels Kühlkanälen erzeugten Luftzugs Wärme besonders vorteilhaft abtransportiert und eine Wärmeaufnahmekapazität der Bremsscheibe erhöht werden kann. Die Luftzuführung kann insbesondere durch Luftleitbleche und/oder Lufteinlasstrichter und/oder Spoileröffnungen eine zusätzliche Kühlluft der Bremsscheibe zuführen. Hierdurch ergibt sich der Vorteil, dass kühler Fahrtwind zur Bremsvorrichtung geleitet werden kann, um diese zusätzlich zu kühlen und um einer Deformation, wie einer Schirmung der Bremsscheibe vorzubeugen. Alternativ oder zusätzlich kann die Wärmeregulierung eine Wärmebehandlung der Bremsscheibe umfassen.

Das erfindungsgemäße Kraftfahrzeug ist bevorzugt als ein Kraftwagen, insbesondere als ein Personenkraftwagen oder als Lastkraftwagen, oder als ein Personenbus oder als ein Motorrad ausgestaltet.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Verfahrens hier nicht noch einmal beschrieben.

Durch die Erfindung wird ein computerlesbares Speichermedium bereitgestellt, wobei des computerlesbare Speichermedium Befehle umfasst, welche bei einer Ausführung durch eine Prozessoreinrichtung diese veranlassen, das Verfahren zum Ermitteln einer benutzerspezifischen Konfiguration einer Bremsvorrichtung eines Kraftfahrzeugs auszuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Bei den Befehlen kann es sich um Steuerbefehle für eine Erfassungseinrichtung zum Erfassen von Messdaten, für eine Speichereinrichtung zum Bereitstellen möglicher Bremsprofile und für eine Auswerteeinrichtung handeln, wobei die Auswerteeinrichtung dazu eingerichtet ist, ein benutzerspezifisches Bremsprofil zu ermitteln, dieses mit den möglichen Bremsprofilen zu vergleichen, die benutzerspezifische Konfiguration zu identifizieren und eine Wechselmaßnahme auszulösen. Insbesondere kann das computerlesbare Speichermedium ein Teil der Prozessoreinrichtung und/oder der Speichereinrichtung sein. In diesem Zusammenhang kann die Prozessoreinrichtung im Kraftfahrzeug und/oder einer mit dem Kraftfahrzeug verbundenen Servereinrichtung angeordnet sein und mit der Erfassungseinrichtung, der Speichereinrichtung und der Auswerteeinrichtung gekoppelt, das heißt verbunden sein.

Zu der Erfindung gehören auch Weiterbildungen des erfindungsgemäßen computerlesbare Speichermediums, die Merkmale aufweisen, wie sie bereits im Zusammenhang mit den Weiterbildungen des erfindungsgemäßen Verfahrens und des erfindungsgemäßen Verfahrens beschrieben worden sind. Aus diesem Grund sind die entsprechenden Weiterbildungen des erfindungsgemäßen Verfahrens und des erfindungsgemäßen Kraftfahrzeugs hier nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine Darstellung eines Kraftfahrzeug beim Befahren eines Fahrbahnabschnitts einer Bergstraße; und
- Fig. 2: ein schematische Darstellung eines Ablauf eines Verfahrens zum Ermitteln einer benutzerspezifische Konfiguration einer Bremsvorrichtung des Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden.

Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

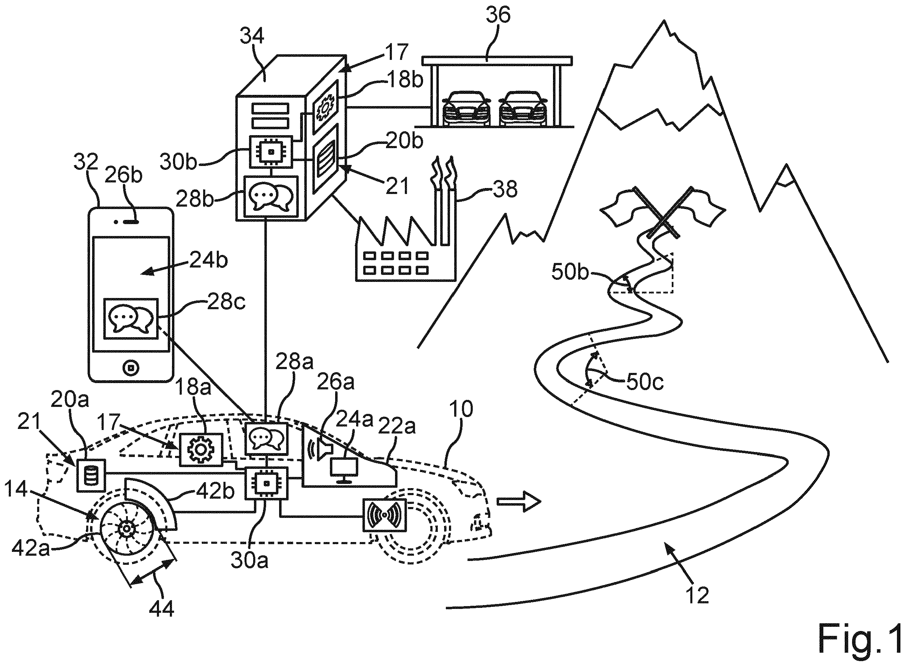

Dem in Fig. 1 gezeigten Ausführungsbeispiel kann folgende Situation beispielhaft zugrunde liegen. Ein Fahrzeuglenker sitzt in einem Kraftfahrzeug 10 und fährt mit dem Kraftfahrzeug 10 entlang eines Fahrbahnabschnitts 12 einer kurvigen und steilen Bergstraße. Das Kraftfahrzeug 10 kann eine Bremsvorrichtung 14, eine Erfassungseinrichtung 16, eine Auswerteeinrichtung 17 mit einer internen Auswerteeinheit 18a, eine Speichereinrichtung 20a, eine Ausgabeeinrichtung 22a, aufweisend einen Bildschirm 24a und einen Lautsprecher 26a, und eine Kommunikationseinrichtung 28a umfassen. Zum Ansteuern der Bremsvorrichtung 14 und jeweiliger Einrichtungen 16, 17, 20a, 22a, 28a des Kraftfahrzeugs 10 können Befehle von einer Prozessoreinrichtung 30a ausgeführt werden, wobei die Befehle in einem als Speichereinrichtung 20a ausgebildeten computerlesbaren Speichermedium 21 hinterlegt und die Prozessoreinrichtung 30a mit der Bremsvorrichtung 14 und jeweiliger Einrichtungen 16, 17, 20a, 22a, 28a gekoppelt, das heißt verbunden sein kann. Mittels der Kommunikationseinrichtung 28a des Kraftfahrzeugs 10 können jeweilige Kommunikationsverbindungen mit einer Kommunikationseinrichtung 28c eines mobilen Endgerät 32 und alternativ oder zusätzlich mit einer Kommunikationseinrichtung 28b einer externen Servereinrichtung 34 aufgebaut werden, wobei die Servereinrichtung 34 einem Fahrzeughersteller 36 und/oder einem Fahrzeugkomponentenherstellers 38 zugeordnet sein kann. Die Servereinrichtung 34 kann eine externe Auswerteeinheit 18b der Auswerteeinrichtung 17, eine Speichereinrichtung 20b und die Kommunikationseinrichtung 28a umfassen, welche mittels einer zentralen Prozessoreinrichtung 30b angesteuert werden können. Alternativ oder zusätzlich kann das computerlesbare Speichermedium 21 kann auch als die Speichereinrichtung 20b der Servereinrichtung 34 ausgebildet sein. Alternativ oder zusätzlich kann das computerlesbare Speichermedium 21 auch in eine oder beide Prozessoreinrichtung 30a, 30b integriert sein.

Die Bremsvorrichtung 14 des Kraftfahrzeugs 10 kann eine aktuelle Konfiguration 40 aufweisen, wobei in diesem Zusammenhang eine Ausgestaltung zumindest eines mechanischen Bauteils 42a, 42b und/oder eine Kombination mehrerer mechanischer Bauteile 42a, 42b der Bremsvorrichtung 14 gegeben ist. Beispielsweise kann das zumindest eine mechanisch Bauteile 42a, 42b eine Bremsscheibe 42a mit einem Durchmesser 44 und zugehörige Bremsbeläge 42b umfassen.

Beim Befahren des Fahrbahnabschnitts 12 werden Messdaten 46 mittels der Erfassungseinrichtung 16, beispielsweise eines Messsensors des Kraftfahrzeugs 10, erfasst. Anhand der Messdaten 46 kann eine benutzerspezifische Nutzung der die aktuelle Konfiguration 40 aufweisenden Bremsvorrichtung 14 beschrieben werden. Die Messdaten 46 können zumindest 2 physikalische Messgrößen 48a, 48b, insbesondere einen Temperaturwert und/oder einen Druckwert als eine erste Messgröße 48a und eine Zeiteinheit als eine zweite Messgröße 48b erfassten. Zusätzlich oder alternativ kann mittels der Erfassungseinrichtung 16 als Messdaten 46 eine Kurvigkeit 50a und/oder eine Steigung 50b des befahrenen Fahrbahnabschnitts 12 erfasst werden.

In einem Datensatz 52 können die Messdaten 46 und Identifikationsdaten 53 zum Identifizieren der aktuellen Konfiguration 40 der Bremsvorrichtung 14 für die Auswerteeinrichtung 17 bereitgestellt werden. In Abhängigkeit von dem bereitgestellten Datensatz 52 kann mittels der Auswerteeinrichtung 17 ein benutzerspezifisches Bremsprofil 54 ermittelt und bereitgestellt werden. Insbesondere kann beim Ermitteln des benutzerspezifischen Bremsprofils 54 eine aktuelle Kennlinie 56 der zumindest zwei Messgrößen 48a, 48b erzeugt werden, anhand derer zumindest ein Überhitzungsereignis 58 identifiziert werden kann. Zusätzlich oder alternativ kann anhand der Kurvigkeit 50a und/oder der Steigung 50b eine die benutzerspezifische Nutzung der Bremsvorrichtung 14 beeinflussende Charakteristik des Fahrbahnabschnitts 12 ermittelt und als Teil des Bremsprofils 54 bereitgestellt werden.

Zum Ermitteln einer benutzerspezifischen Konfiguration 60 können mögliche Bremsprofile 62a, 62b, beispielsweise von der Speichereinrichtung 20a, 20b, für die Auswerteeinrichtung 17 bereitgestellt werden, von denen jedes Bremsprofil 62a, 62b einer jeweiligen alternativen Konfiguration 64a, 64b der Bremsvorrichtung 14 zugeordnet sein kann. In diesem Zusammenhang ist die jeweilige alternative Konfiguration 64a, 64b in dem Kraftfahrzeug 10 auswählbar. Anschließend kann dasjenige mögliche Bremsprofil 62a mittels der Auswerteeinrichtung 17 erkannt werden, das mit dem benutzerspezifischen Bremsprofil 54 einen größten Übereinstimmungsgrad 66 aufweist und die zugeordnete Konfiguration 64a als die benutzerspezifische Konfiguration 60 identifiziert werden. Zum Bereitstellen der benutzerspezifischen Konfiguration 60 in dem Kraftfahrzeug 10 kann eine Wechselmaßnahme mittels der Auswerteeinrichtung 17 ausgelöst werden. Hierbei kann mittels der Wechselmaßnahme ein Wechsel des zumindest einen Bauteils 42a, 42b durchgeführt werden, wobei vor dem Wechsel ein Eingriff 68 in einen Betrieb des Kraftfahrzeugs 10 zumindest ein Steuerparameter, beispielsweise ein Bremsdruck, angepasst und/oder zumindest eine Komponente des Kraftfahrzeugs 10, beispielsweise ein Motor und/oder die Bremsvorrichtung 14, deaktiviert werden kann. Alternativ oder zusätzlich kann eine Anfrage 70 zum Bereitstellen des zumindest einen Bauteils 42a, 42b durchgeführt wird, wobei bei einem Hersteller wie dem Fahrzeughersteller 36, und/oder einem Händler des zumindest einen Bauteils 42a, 42b dessen Verfügbarkeit angefragt wird.

Im Zusammenhang mit der Wechselmaßnahme kann ein Ausgabeinhalt 72 einem Benutzer des Kraftfahrzeugs 10, d. h. dem Fahrzeuglenker, mittels der Ausgabeeinrichtung 22a, die in das Kraftfahrzeug 10 integriert ist und den Bildschirm 24a und den Lautsprecher 26b aufweist ausgegeben werden. Zusätzlich oder alternativ kann der Ausgabeinhalt 72 mittels einer Ausgabeeinrichtung 22b, welche Teil des mobilen Endgeräts 32 ist und einen Bildschirm 24b und einen Lautsprecher 26b umfassen kann, ausgegeben werden. Dabei kann der Ausgabeinhalt 72 das benutzerspezifische Bremsprofil 54 und die daraus empfohlene benutzerspezifische Konfiguration 60 der Bremsvorrichtung 14 charakterisieren. Als Reaktion auf die Ausgabe des Ausgabeinhalts 72 kann eine Benutzereingabe 74, beispielsweise zum Bestätigen eines Wechsels des zumindest einen Bauteils 42a, 42b, erfasst werden.

Dabei kann die jeweilige Konfiguration 40, 60, 64a, 64b der Bremsvorrichtung 14 dazu eingerichtet sein, eine die Ausgestaltung der Bremsschreibe 42a und/oder des Bremsbelags 42b der Bremsvorrichtung 14 vorzugegeben. Durch die jeweilige Konfiguration 40, 60, 64a, 64b der Bremsvorrichtung 14 kann eine für das jeweilige Bremsprofil 54, 62a, 62b charakteristische Wärmebeanspruchung der Bremsvorrichtung 14 resultieren. Zum Reduzieren einer aktuellen Wärmebeanspruchung der Bremsvorrichtung 14 kann mittels der ausgelösten Wechselmaßnahme die aktuelle Konfiguration 40 durch die benutzerspezifische Konfiguration 60 ausgetauscht werden. Insbesondere kann die jeweilige Konfiguration 40, 60, 64a, 64b der Bremsscheibe 42a den Durchmessers 44 und/oder eine Belüftung und/oder eine Luftzuführung zum Regulieren einer Wärmebeanspruchung vorgeben.

Beim Bereitstellen des Datensatz 52 und/oder des benutzerspezifischen Bremsprofils 54 für die externe Auswerteeinheit 18b können benutzerbezogene Daten des jeweiligen Benutzers des Kraftfahrzeugs 10 pseudonymisiert und/oder anonymsiert übermittelt werden, um insbesondere Datenschutzvorgabe erfüllen zu können.

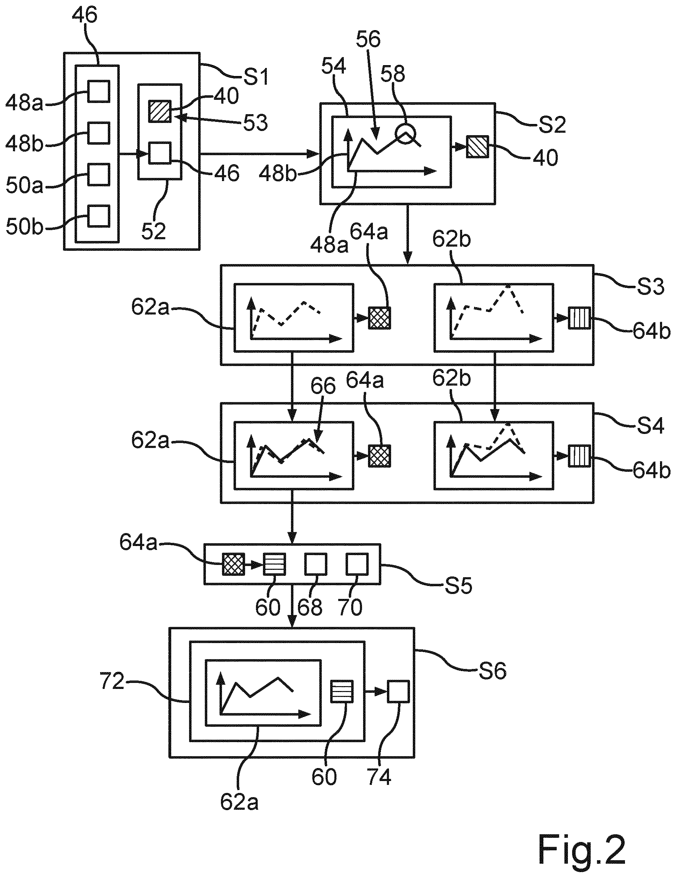

In Fig. 2 ist schematisch ein Verfahren zum Ermitteln der benutzerspezifischen Konfiguration 60 der Bremsvorrichtung 14 erläutert. In einem ersten Schritt S1 des Verfahrens werden Messdaten 46 mittels der Erfassungseinrichtung 16 ermittelt und der Datensatz 52 bereitgestellt, wobei in einem zweiten Schritt S2 des Verfahrens basierend auf dem Datensatz 52 das benutzerspezifisches Bremsprofil 54 ermittelt und bereitgestellt wird. In einem dritten Schritt S3 des Verfahrens werden mögliche Bremsprofile 62a, 62b bereitgestellt, welche beim Erkennen desjenigen möglichen Bremsprofils 62a mit dem höchsten Übereinstimmungsgrad 66 und beim Identifizieren der zugeordneten Konfiguration 64a als die benutzerspezifische Konfiguration 60 in einem vierten Schritt S4 des Verfahrens berücksichtigt werden. In einem fünften Schritt S5 des Verfahrens wird eine Wechselmaßnahme ausgelöst, wobei in einem sechsten Schritt S6 des Verfahrens ein Ausgabeinhalt 72 ausgegeben und als Reaktion auf die Ausgabe des Ausgabeinhalts 72 eine Benutzereingabe 74 erfasst werden kann.

Somit kann die benutzerspezifische Konfiguration 60 der Bremsvorrichtung 14 des Kraftfahrzeugs 10 in Abhängigkeit von der benutzerspezifischen Nutzung der aktuellen Konfiguration 40 der Bremsvorrichtung 14 ermittelt werden.

Der Erfindung liegt die Erkenntnis zugrunde, dass eine individuelle Empfehlung zur Bremsnachrüstung, d. h. dem Wechsel von der aktuellen Konfiguration 40 auf die benutzerspezifische Konfiguration 60 der Bremsvorrichtung 14, auf Basis von einem Nutzungsverhalten eines Fahrers des Kraftfahrzeugs 10, das heißt eines Kunde oder des Fahrzeuglenkers, abgeleitet werden kann. Zurzeit fließen keine Informationen (Datensatz 52) bezüglich des Nutzungsverhaltens eines Kunden in einen Verkauf der Bremsvorrichtung 14 bzw. des zumindest einen mechanischen Bauteils 42 A, 42 B der Bremsvorrichtung 14 mit ein. Des Weiteren fehlen Automobilherstellern (Fahrzeughersteller 36) Informationen (Datensatz 52), um dem Kunden basierend auf dessen spezifischen Nutzungsverhalten passende, das heißt geeignete Bremsen (Bremsvorrichtung 14), insbesondere zur Bremsnachrüstung, anbieten zu können. Basierend auf Fahrzeugdaten und Teiledaten (Datensatz 52) kann auf das spezifische Nutzungsverhalten geschlossen werden. Auf diese Art können beispielsweise der sehr sportliche Fahrer ermittelt werden, der von einer größeren und stärker belüfteten Bremse (Bremsvorrichtung 14) direkt profitieren würden.

Hierdurch ergibt sich für Automobilhersteller (Fahrzeughersteller 36) der Vorteil, dass die Bremsscheibe 42a und die Bremsbelägen 42b individuell empfohlen und damit potentielle Umsatzsteigerung durch einen Verkauf von größeren Bremsen (Bremsvorrichtung 14) erzielt werden können. Gesammelte Informationen (Datensatz 52) können an Bremsenlieferanten (Fahrzeugkomponentenhersteller 38) verkauft werden, die damit wiederrum Rückschlüsse für eine eigene Entwicklungstätigkeit ziehen können. Des Weiteren ergibt sich für den Kunden der Vorteil, dass dieser Informationen über das eigene Fahrverhalten (benutzerspezifisches Bremsprofil 54) erhalten kann. Zusätzlich kann ein Sicherheitsgewinn durch einen Verbau von geeigneten Bremsen (Bremsvorrichtung 14) auf Basis von einer ermittelten progressiven Fahrweise erzielt und dadurch eine Überhitzungsgefahr reduziert werden kann.

Zum Ermitteln der benutzerspezifischen Konfiguration 60 der Bremsvorrichtung 14 werden Sensordaten (Messdaten 46) im Fahrzeug (Kraftfahrzeug 10), die Aufschluss über eine spezifische Nutzung der Bremsen (Bremsvorrichtung 14) geben, beispielsweise eine Bremsentemperatur und/oder ein angesetzter Bremsendruck (erste Messgröße 48a), gesammelt. Anschließend können die Daten (Datensatz 52) an ein Backend (Servereinrichtung 34) über ein fahrzeuginternes Kommunikationsmodul (Kommunikationseinrichtung 28a) übermittelt werden. Die vorliegende Daten (Datensatz 52) können analysiert werden, um Rückschlüsse auf ein Nutzungsprofil (benutzerspezifisches Bremsprofil 54) schließen zu können. Beispielsweise kann ein über einen Temperatursensor (Erfassungseinrichtung 16) ermittelter Temperaturverlauf (Kennlinie 56) Aufschluss darüber geben, ob überdurchschnittlich oft Überhitzungsereignisse 58 stattgefunden haben. Darauf basierend würde der zugrundeliegende Algorithmus die Nutzung der Bremsscheibe 42a vorschlagen, welche eine bessere Wärmeabfuhr ermöglicht. Ein Analyseergebnis (benutzerspezifisches Bremsprofil 54 und benutzerspezifische Konfiguration 60) kann dem Kunden über ein Front-End (Ausgabeeinrichtung 22a, 22b), beispielweise eine App, angezeigt werden. Dies kann gegebenenfalls mit einer direkten Terminvereinbarung beim Händler kombiniert werden. Des Weiteren kann das Analyseergebnis der Fahrzeugnutzung bzw. Teilenutzung (benutzerspezifisches Bremsprofil 54 und aktuelle Konfiguration 40) einem Bremsenhersteller (Fahrzeugkomponentenhersteller 38) in einem Dashboard (Armaturenbrett) angezeigt werden. Dieses gibt Aufschluss über die Nutzung der im Fahrzeug (Kraftfahrzeug 10) verbauten Teile (zumindest eine Bauteil 42a, 42b) und bietet dem Bremsenhersteller (Fahrzeugkomponentenhersteller 38) die Möglichkeit die Daten (Datensatz 52) in eine Entwicklung einfließen zu lassen. Aber auch in den einen Verkauf über eine vom Fahrzeughersteller 36 bereitgestellte Plattform direkt an den Kunden kann realisiert werden, um ihm so ein besseres Set-Up (benutzerspezifische Konfiguration 60) bieten zu können.

Insgesamt zeigen die Beispiele, wie durch die Erfindung eine individuelle Empfehlung zur Bremsnachrüstung, das heißt die benutzerspezifische Konfiguration 60 der Bremsvorrichtung 14, auf Basis von Nutzungsverhalten des Fahrer bereitgestellt werden kann.

## Patentansprüche

1. Verfahren zum Ermitteln einer benutzerspezifischen Konfiguration (60) einer Bremsvorrichtung (14) eines Kraftfahrzeuges (10), wobei die Konfiguration (40, 60, 64a, 64b) durch eine Ausgestaltung zumindest eines mechanischen Bauteils (42a, 42b) und/oder eine Kombination mehrerer mechanischer Bauteile (42a, 42b) gegeben ist, umfassend folgende Schritte:
- Erfassen von Messdaten (46) mittels einer Erfassungseinrichtung (16) des Kraftfahrzeugs (10), wobei durch die Messdaten (46) eine benutzerspezifische Nutzung der eine aktuelle Konfiguration (40) aufweisenden Bremsvorrichtung (14) des Kraftfahrzeugs (10) beschrieben wird, und Bereitstellen eines Datensatzes (52) für eine Auswerteeinrichtung (17), wobei der Datensatz (52) die Messdaten (46) und Identifikationsdaten (53) zum Identifizieren der aktuellen Konfiguration (40) der Bremsvorrichtung (14) umfasst (S1);
- Ermitteln eines benutzerspezifischen Bremsprofils (54) in Abhängigkeit von dem bereitgestellten Datensatz (52) mittels der Auswerteinrichtung (17) und Bereitstellen des benutzerspezifischen Bremsprofils (54) (S2);
- Bereitstellen möglicher Bremsprofile (62a, 62b) für die Auswerteeinrichtung (17), von denen jedes Bremsprofil (62a, 62b) einer jeweiligen alternativen Konfiguration (64a, 64b) der Bremsvorrichtung (14), wie sie für das Kraftfahrzeug (10) auswählbar ist, zugeordnet ist (S3);
- Erkennen desjenigen möglichen Bremsprofils (62a) mittels der Auswerteinrichtung (17), das mit dem benutzerspezifischen Bremsprofil (54) einen größten Übereinstimmungsgrad (66) aufweist, und Identifizieren der zugeordneten Konfiguration (64a) als die benutzerspezifische Konfiguration (60) (S4); und
- Auslösen einer Wechselmaßnahme mittels der Auswerteeinrichtung (17) zum Bereitstellen der benutzerspezifischen Konfiguration (60) in dem Kraftfahrzeug (10) (S5).

2. Verfahren nach Anspruch 1, wobei mittels der Wechselmaßnahme ein Wechsel des zumindest einen Bauteils (42a, 42b) veranlasst wird, wobei vor dem Wechsel ein Eingriff (68) in einen Betrieb des Kraftfahrzeugs (10) und/oder eine Anfrage (70) zum Bereitstellen des zumindest einen Bauteils (42a, 42b) durchgeführt wird, wobei beim Durchführen des Eingriffs (68) in den Betrieb zumindest ein Steuerparameter des Kraftfahrzeugs (10) angepasst und/oder zumindest eine Komponente des Kraftfahrzeugs (10) deaktiviert wird, wobei beim Durchführen der Anfrage (70) zum Bereitstellen (42a, 42b) bei einem Hersteller und/oder einem Händler des zumindest einen Bauteils (42a, 42b) dessen Verfügbarkeit angefragt wird.

3. Verfahren nach einem der vorhergehenden Ansprüche, wobei im Zusammenhang mit der Wechselmaßnahme ein Ausgabeinhalt (72), welcher das ermittelte Bremsprofil (54) und die daraus empfohlene benutzerspezifische Konfiguration (60) der Bremsvorrichtung (16) charakterisiert, einem Benutzer des Kraftfahrzeugs (10) mittels einer Ausgabeeinrichtung (22a, 22b) ausgegeben wird, wobei die Ausgabeeinrichtung (22a, 22b) in das Kraftfahrzeug (10) integriert und/oder Teil eines mobilen Endgeräts (32) ist, und wobei als Reaktion auf die Ausgabe des Ausgabeinhalts (72) eine Benutzereingabe (74) erfasst wird (S6).

4. Verfahren nach einem der vorhergehenden Ansprüche, wobei durch die jeweilige Konfiguration (40, 60, 64a, 64b) der Bremsvorrichtung (14) eine für das jeweilige Bremsprofil (54, 62a, 62b) charakteristische Wärmebeanspruchung der Bremsvorrichtung (14) resultiert und mittels der ausgelösten Wechselmaßnahme die aktuelle Konfiguration (40) durch eine solche benutzerspezifische Konfiguration (60) ausgetauscht wird, durch welche eine aktuelle Wärmebeanspruchung der Bremsvorrichtung (14) reduziert wird.

5. Verfahren nach einem der vorhergehenden Ansprüche, wobei beim Erfassen der Messdaten (46) zumindest zwei physikalische Messgrößen (48a, 48b), insbesondere ein Temperaturwert und/oder ein Druckwert, als eine jeweilige erste Messgröße (48a) und eine Zeiteinheit als eine zweite Messgröße (48b), erfasst werden, wobei beim Ermitteln des benutzerspezifischen Bremsprofils (54) eine aktuelle Kennlinie (56) der zumindest zwei Messgrößen (48a, 48b) erzeugt wird, anhand derer zumindest ein Überhitzungsereignis (58) identifiziert wird.

6. Verfahren nach einem der vorhergehenden Ansprüche, wobei beim Erfassen der Messdaten (46) eine Kurvigkeit (50a) und/oder eine Steigung (50b) eines befahrenen Fahrbahnabschnitts (12) erfasst wird, wobei anhand der Kurvigkeit (50a) und/oder der Steigung (50b) eine die benutzerspezifische Nutzung der Bremsvorrichtung (14) beeinflussende Charakteristik des Fahrbahnabschnitts (12) ermittelt und als Teil des Bremsprofils (54) bereitgestellt wird.

7. Verfahren nach einem der vorhergehenden Ansprüche, wobei die Auswerteinrichtung (17) eine interne Auswerteeinheit (18a) des Kraftfahrzeugs (10) und/oder eine mit dem Kraftfahrzeug (10) verbundene externe Auswerteeinheit (18b) einer Servereinrichtung (34), insbesondere einer Servereinrichtung (34) eines Fahrzeugherstellers (36) und/oder eines Fahrzeugkomponentenherstellers (38), umfasst, wobei bei dem Bereitstellen des Datensatzes (52) und/oder des benutzerspezifischen Bremsprofils (54) für die externe Auswerteinheit (18b) benutzerbezogene Daten eines jeweiligen Benutzers des Kraftfahrzeugs (10) pseudonymisiert und/oder anonymsiert übermittelt werden.

8. Kraftfahrzeug (10) mit einer Bremsvorrichtung (14) für ein Verfahren nach einem der vorhergehenden Ansprüche, wobei die jeweilige Konfiguration (40, 60, 64a, 64b) der Bremsvorrichtung (14) dazu eingerichtet ist, eine Ausgestaltung einer Bremsschreibe (42a) und/oder eines Bremsbelags (42b) der Bremsvorrichtung (14) vorzugegeben, und wobei das Kraftfahrzeug (10) dazu ausgebildet ist, das Verfahren nach einem der vorhergehenden Ansprüche durchzuführen.

9. Kraftfahrzeug nach Anspruch 8, wobei die jeweilige Konfiguration (40, 60, 64a, 64b) der Bremsscheibe (42a) einen Durchmessers (44) der und/oder eine Belüftung und/oder eine Luftzuführung zum Regulieren einer Wärmebeanspruchung der Bremsscheibe (42a) vorgibt.

10. Computerlesbares Speichermedium (21), umfassend Befehle, die bei einer Ausführung durch eine Prozessoreinrichtung (30a, 30b) diese veranlassen, das Verfahren nach einem der Ansprüche 1 bis 7 auszuführen.

## Claims

1. Method for determining a user-specific configuration (60) of a braking device (14) of a motor vehicle (10), wherein the configuration (40, 60, 64a, 64b) is provided by a design of at least one mechanical component (42a, 42b) and/or a combination of several mechanical components (42a, 42b), comprising the following steps:
- Detecting measurement data (46) by means of a detection apparatus (16) of the motor vehicle (10), wherein a user-specific use of the braking device (14) of the motor vehicle (10) having a current configuration (40) is described by means of the measurement data (46), and providing a data record (52) for an evaluation apparatus (17), wherein the data record (52) comprises the measurement data (46) and identification data (53) for identifying the current configuration (40) of the braking device (14) (S1);
- Determining a user-specific braking profile (54) on the basis of the data record (52) provided by means of the evaluation apparatus (17) and providing the user-specific braking profile (54) (S2);
- Providing possible braking profiles (62a, 62b) for the evaluation apparatus (17), of which each braking profile (62a, 62b) is assigned a respective alternative configuration (64a, 64b) of the braking device (14), as it can be selected for the motor vehicle (10) (S3);
- Identifying the possible braking profile (62a) by means of the evaluation apparatus (17), which has the greatest degree of correspondence (66) with the user-specific braking profile (54), and identifying the associated configuration (64a) as the user-specific configuration (60) (S4); and
- Triggering a changeover operation by means of the evaluation apparatus (17) in order to provide the user-specific configuration (60) in the motor vehicle (10) (S5).

2. Method according to claim 1, wherein a change of the at least one component (42a, 42b) is initiated by means of the changeover operation, wherein, before the change, an intervention (68) in an operation of the motor vehicle (10) and/or a request (70) to provide the at least one component (42a, 42b) is performed, wherein, when performing the intervention (68) in the operation, at least one control parameter of the motor vehicle (10) is adjusted and/or at least one component of the motor vehicle (10) is deactivated, wherein, when issuing the request (70) for provision (42a, 42b) to a manufacturer and/or a dealer of the at least one component (42a, 42b), its availability is requested.

3. Method according to any of the preceding claims, wherein, in connection with the changeover operation, an output content (72), which characterises the determined braking profile (54) and the resulting recommended user-specific configuration (60) of the braking device (16), is issued to a user of the motor vehicle (10) by means of the output apparatus (22a, 22b), wherein the output apparatus (22a, 22b) is integrated into the motor vehicle (10) and/or is part of a mobile terminal (32), and wherein a user input (74) is detected (S6) as a response to the issuing of the output content (72).

4. Method according to any of the preceding claims, wherein the respective configuration (40, 60, 64a, 64b) of the braking device (14) results in a characteristic thermal stress on the braking device (14) for the respective braking profile (54, 62a, 62b) and the current configuration (40) is replaced, by means of the triggered changeover operation, with a user-specific configuration (60) by means of which a current thermal stress on the braking device (14) is reduced.

5. Method according to any of the preceding claims, wherein, when detecting the measurement data (46), at least two physical measured variables (48a, 48b), in particular a temperature value and/or a pressure value, are detected as a respective first measured variable (48a) and a time unit is detected as a second measured variable (48b) wherein, when determining the user-specific braking profile (54), a current characteristic curve (56) of the at least two measured variables (48a, 48b) is generated, by means of which at least one overheating event (58) is identified.

6. Method according to any of the preceding claims, wherein, when detecting the measurement data (46), a curvature (50a) and/or a gradient (50b) of a carriageway section (12) travelled on is detected, wherein a characteristic of the carriageway section (12) influencing the user-specific use of the braking device (14) is determined by means of the curvature (50a) and/or the gradient (50b) and provided as part of the braking profile (54).

7. Method according to any of the preceding claims, wherein the evaluation apparatus (17) comprises an internal evaluation unit (18a) of the motor vehicle (10) and/or an external evaluation unit (18b) of a server apparatus (34) connected to the motor vehicle (10), in particular a server apparatus (34) of a vehicle manufacturer (36) and/or a vehicle component manufacturer (38), wherein, when providing the data record (52) and/or the user-specific braking profile (54) for the external evaluation unit (18b), user-related data for a respective user of the motor vehicle (10) is transmitted in a pseudonymised and/or anonymised form.

8. Motor vehicle (10) having a braking device (14) for a method according to any of the preceding claims, wherein the respective configuration (40, 60, 64a, 64b) of the braking device (14) is designed to provide an arrangement of a brake disc (42a) and/or a brake pad (42b) of the braking device (14), and wherein the motor vehicle (10) is designed to implement the method according to any of the preceding claims.

9. Motor vehicle according to claim 8, wherein the respective configuration (40, 60, 64a, 64b) of the brake disc (42a) specifies a diameter (44) of the and/or a vent and/or an air supply for regulating a thermal stress on the brake disc (42a).

10. Computer-readable storage medium (21), comprising commands, which, on execution by a processor apparatus (30a, 30b), instruct the latter to implement the method according to any of claims 1 to 7.

## Revendications

1. Procédé de détermination d'une configuration spécifique à l'utilisateur (60) d'un dispositif de freinage (14) d'un véhicule automobile (10), dans lequel la configuration (40, 60, 64a, 64b) est donnée par une configuration au moins d'un composant mécanique (42a, 42b) et/ou une combinaison de plusieurs composants mécaniques (42a, 42b), comprenant les étapes suivantes :
- la détection de données de mesure (46) au moyen d'un dispositif de détection (16) du véhicule automobile (10), dans lequel une utilisation spécifique à l'utilisateur du dispositif de freinage (14) présentant une configuration actuelle (40) du véhicule automobile (10) est décrite par les données de mesure (46), et la fourniture d'un jeu de données (52) pour un appareil d'évaluation (17), dans lequel le jeu de données (52) comporte les données de mesure (46) et des données d'identification (53) pour l'identification de la configuration actuelle (40) du dispositif de freinage (14) (S1) ;
- la détermination d'un profil de freinage (54) spécifique à l'utilisateur en fonction du jeu de données (52) fourni au moyen de l'appareil d'évaluation (17) et la fourniture du profil de freinage (54) spécifique à l'utilisateur (S2) ;
- la fourniture de profils de freinage (62a, 62b) possibles pour l'appareil d'évaluation (17), dont chaque profil de freinage (62a, 62b) est associé à une configuration (64a, 64b) alternative respective du dispositif de freinage (14), comme elle est sélectionnable pour le véhicule automobile (10) (S3) ;
- la reconnaissance du profil de freinage (62a) possible au moyen du dispositif d'évaluation (17) qui présente avec le profil de freinage (54) spécifique à l'utilisateur un degré de concordance (66) supérieur, et l'identification de la configuration associée (64a) comme la configuration (60) spécifique à l'utilisateur (S4) ; et
- le déclenchement d'une mesure de changement au moyen de l'appareil d'évaluation (17) pour la fourniture de la configuration (60) spécifique à l'utilisateur dans le véhicule automobile (10) (S5).

2. Procédé selon la revendication 1, dans lequel un changement d'au moins un composant (42a, 42b) est incité au moyen de la mesure de changement, dans lequel avant le changement une prise (68) dans un fonctionnement du véhicule automobile (10) et/ou une demande (70) de fourniture d'au moins un composant (42a, 42b) est réalisée, dans lequel lors de la réalisation de la prise (68) dans le fonctionnement au moins un paramètre de commande du véhicule automobile (10) est adapté et/ou au moins un composant du véhicule automobile (10) est désactivé, dans lequel lors de la réalisation de la demande (70) de fourniture (42a, 42b) auprès d'un constructeur et/ou un distributeur d'au moins un composant (42a, 42b) sa disponibilité est demandée.

3. Procédé selon l'une quelconque des revendications précédentes, dans lequel en rapport avec la mesure de changement un contenu de sortie (72) qui caractérise le profil de freinage (54) déterminé et la configuration (60) spécifique à l'utilisateur recommandée à partir de celui-ci du dispositif de freinage (16), est sorti à un utilisateur du véhicule automobile (10) au moyen d'un dispositif de sortie (22a, 22b), dans lequel le dispositif de sortie (22a, 22b) est intégré dans le véhicule automobile (10) et/ou fait partie d'un terminal (32) mobile, et dans lequel une entrée utilisateur (74) est détectée en réaction à la sortie du contenu de sortie (72) (S6).

4. Procédé selon l'une quelconque des revendications précédentes, dans lequel il résulte par la configuration (40, 60, 64a, 64b) respective du dispositif de freinage (14) un stress thermique caractéristique pour le profil de freinage (54, 62a, 62b) respectif du dispositif de freinage (14) et au moyen de la mesure de changement déclenchée la configuration actuelle (40) est échangée contre une telle configuration (60) spécifique à l'utilisateur, par laquelle un stress thermique actuel du dispositif de freinage (14) est réduit.

5. Procédé selon l'une quelconque des revendications précédentes, dans lequel lors de la détection des données de mesure (46) au moins deux grandeurs de mesure (48a, 48b) physiques, en particulier une valeur de température et/ou une valeur de pression, sont détectées comme une première grandeur de mesure (48b) respective et une unité de temps comme une seconde grandeur de mesure (48b), dans lequel lors de la détermination du profil de freinage (54) spécifique à l'utilisateur une ligne caractéristique (56) actuelle des au moins deux grandeurs de mesure (48a, 48b) est générée, à l'aide de laquelle au moins un événement de surchauffe (58) est identifié.

6. Procédé selon l'une quelconque des revendications précédentes, dans lequel lors de la détection des données de mesure (46) une sinuosité (50a) et/ou une pente (50b) d'une section de chaussée (12) traversée est détectée, dans lequel une caractéristique influençant l'utilisation spécifique à l'utilisateur du dispositif de freinage (14) de la section de chaussée (12) est déterminée à l'aide de la sinuosité (50a) et/ou la pente (50b) et est fournie comme partie du profil de freinage (54).

7. Procédé selon l'une quelconque des revendications précédentes, dans lequel l'appareil d'évaluation (17) comporte une unité d'évaluation (18a) interne du véhicule automobile (10) et/ou une unité d'évaluation (18b) externe reliée au véhicule automobile (10) d'un dispositif serveur (34), en particulier d'un dispositif serveur (34) d'un constructeur de véhicule (36) et/ou d'un constructeur de composant de véhicule (38), dans lequel lors de la fourniture du jeu de données (52) et/ou du profil de freinage (54) spécifique à l'utilisateur pour l'unité d'évaluation (18b) externe des données liées à l'utilisateur d'un utilisateur respectif du véhicule automobile (10) sont transmises sous forme pseudonymisée et/ou anonymisée.

8. Véhicule automobile (10) avec un dispositif de freinage (14) pour un procédé selon l'une quelconque des revendications précédentes, dans lequel la configuration (40, 60, 64a, 64b) respective du dispositif de freinage (14) est conçue afin de prédéfinir une configuration d'un disque de frein (42a) et/ou d'une garniture de frein (42b) du dispositif de freinage (14), et dans lequel le véhicule automobile (10) est réalisé afin de réaliser le procédé selon l'une quelconque des revendications précédentes.

9. Véhicule automobile selon la revendication 8, dans lequel la configuration (40, 60, 64a, 64b) respective du disque de frein (42a) prédéfinit un diamètre (44) du et/ou une ventilation et/ou un apport d'air pour la régulation d'un stress thermique du disque de frein (42a).

10. Support d'enregistrement (21) lisible par ordinateur comprenant des ordres qui incitent lors d'une réalisation par un dispositif de processeur (30a, 30b) celui-ci à réaliser le procédé selon l'une des revendications 1 à 7.
